# EUROPÄISCHE PATENTSCHRIFT

(11) **EP 2 296 947 B1**
(45) Veröffentlichungstag und Bekanntmachung des Hinweises auf die Patenterteilung: **20.02.2013**
(21) Anmeldenummer: 09779831.8
(22) Anmeldetag: 18.06.2009
(51) Int. Cl.: B60S 1/38

(54) **VERFAHREN ZUR MODIFIZIERUNG DER OBERFLÄCHE EINES WISCHBLATTS FÜR SCHEIBENWISCHER UNTER EINWIRKUNG VON OZON**
METHOD FOR THE MODIFICATION OF THE SURFACE OF A WIPER BLADE FOR WIPER UNDER THE INFLUENCE OF OZONE
MÉTHODE DE MODIFICATION DE LA SURFACE D'UN BALAI D'ESSUIE-GLACE SOUS L'INFLUENCE D'OZONE

(30) Priorität: 07.07.2008 DE 102008040209
(43) Veröffentlichungstag der Anmeldung: 23.03.2011
(73) Patentinhaber: Robert Bosch GmbH, 70442 Stuttgart (DE)
(72) Erfinder: PIETERS, Eric, NL-6369 AK Simpelveld (NL)
(86) Internationale Anmeldenummer: PCT/EP2009/057594
(87) Internationale Veröffentlichungsnummer: WO 2010/003798

(56) Entgegenhaltungen:
- DE-A1- 10 132 026
- US-A1- 2006 112 512

## Beschreibung

Die vorliegende Erfindung betrifft ein Verfahren zur Modifizierung der Oberfläche eines Wischblatts für Scheibenwischer, wobei das Material des Wischblatts ein Elastomer mit olefinischen Kohlenstoff-Kohlenstoff-Doppelbindungen umfasst. Sie betrifft weiterhin ein Wischblatt für Scheibenwischer, dessen Oberfläche durch ein solches Verfahren modifiziert wurde und die Verwendung eines derart oberflächenmodifizierten elastomeren strangförmigen Profils als Wischblatt für Scheibenwischer.

### Stand der Technik

Wischblätter, wie sie in Scheibenwischern eingesetzt werden, weisen in ihrem Querschnitt häufig einen Aufbau mit einem Basisteil und einem Schwenkteil auf. Das Schwenkteil selbst kann einen dreieckigen Querschnitt haben und über einen dünnen Kippsteg mit dem Basisteil verbunden sein. Der vordere Bereich des Schwenkteils wird als Wischerlippenbereich bezeichnet, da das Wischblatt mit diesem Teil über die Windschutzscheibe gleitet und dabei dort befindliches Wasser und Schmutz entfernt.

Wischblätter aus Gummi können komplett oder nur Bereich der Wischerlippe mit einer reibungsmindernden Beschichtung versehen werden, um die Gleitreibung auf einer Scheibe aus Glas oder Kunststoff zu reduzieren, die Verschleißfestigkeit der Wischkante zu verbessern und um das Rattern zu vermeiden. Dieses ist besonders von Bedeutung, wenn der Scheibenwischer bei trockener oder fast trockener Glasscheibe betätigt wird, um beispielsweise Staub oder Insekten von der Scheibe zu entfernen.

Zur Reduzierung der Reibung des Wischblattes auf der Scheibe wurden bislang verschiedene Möglichkeiten vorgeschlagen. So können aus Kautschuk bestehende Wischblätter mit Halogenen behandelt werden. Durch zum Beispiel Chlorieren oder Bromieren erreicht man eine Härtung des Kautschuks und die Reibung auf Glas wird vermindert. Die Chlorierung der Wischerleiste erfolgt beispielsweise durch Eintauchen der Wischerleiste in einer Chlor abspaltenden wässrigen Lösung.

Zusätzlich wird oft noch eine Graphitsuspension im Bereich der Wischerlippe aufgetragen, indem Graphitpulver in einem geeigneten organischen Träger fein verteilt wird, der dann auf den Bereich der Wischerlippe aufgesprüht wird. Der Träger verdampft und die Graphitpartikel verbleiben feinverteilt auf der Gummioberfläche. Hierdurch wird die Reibung zwischen Gummi und Scheibe weiter reduziert. Auf diese Weise soll ein zuverlässiges Wischverhalten unter allen Betriebsbedingungen erzielt und das Rattern der Wischerleiste auf der Scheibe unabhängig von dem Zustand der Scheibe und der Wassermenge auf der Scheibe vermieden werden. Da die Graphitpartikel keine ausreichende Haftung auf dem Gummi aufweisen, lässt ihre Wirkung oft nach kurzer Betriebszeit der Wischerlippe nach.

Zur Verbesserung der Haftung der Beschichtung auf der Wischerlippe kann ein reibungsvermindernder Zusatz unter Zuhilfenahme eines Bindemittels aufgetragen werden. So offenbart DE 101 32 026 A1 ein Beschichtungsmittel für Gummiwischerblätter, aufweisend ein partikelförmiges Feststoffschmiermittel und ein Bindemittel zur Haftung des Feststoffschmiermittels auf einem Gummiwischerblatt. Das Bindemittel weist ein 0,5%-Modul von 1 MPa oder mehr und eine Bruchlängung von 1% oder mehr nach dem Trocknen oder Aushärten auf.

Wünschenswert wären aber weiterhin neue Verfahren, um reibungsarme Wischblätter und insbesondere Wischerlippen bereitzustellen, wobei entweder die Wischblätter als solche reibungsärmer bereitgestellt werden oder aber die Haftung einer reibungsvermindernden Beschichtung auf dem Wischblatt verbessert wird.

### Offenbarung der Erfindung

Erfindungsgemäß vorgeschlagen wird ein Verfahren zur Modifizierung der Oberfläche eines Wischblatts für Scheibenwischer, wobei das Material des Wischblatts ein Elastomer mit olefinischen Kohlenstoff-Kohlenstoff-Doppelbindungen umfasst. Das erfindungsgemäße Verfahren ist dadurch gekennzeichnet, dass man künstlich hergestelltes gasförmiges Ozon zumindest auf einen Teil der Elastomeroberfläche einwirken lässt und wobei der Abschnitt des Wischblatts, auf dessen Oberfläche das Ozon einwirkt, während der Einwirkung höchstens bis zu der für die Ozoneinwirkung kritischen Dehnungsgrenze des Elastomers gedehnt wird.

Ein Wischblatt für Scheibenwischer im Sinne der vorliegenden Erfindung kann auch als elastomeres strangförmiges Profil bezeichnet werden, welches für den Einsatz in einem Scheibenwischer vorgesehen ist. Die Scheibenwischer können beispielsweise zur Reinigung von Glas- oder Kunststoffscheiben von Wasser, Schmutz und Insektenkörpern eingesetzt werden.

Es ist vorgesehen, dass das Material des Wischblatts ein Elastomer mit olefmischen Kohlenstoff-Kohlenstoff-Doppelbindungen umfasst. Unter "olefinisch" sind allgemein solche Doppelbindungen zu verstehen, welche nicht Teil eines aromatischen Systems sind. Bezüglich der Polymerketten des Elastomers können die olefinischen Doppelbindungen sowohl in der Hauptkette als auch in einer Seitenkette anwesend sein. Beispiele für Elastomere sind ausgewählt aus der Gruppe umfassend Ethylen-Propylen-Dien-Elastomer, Chlor-Butadien-Elastomer, Naturkautschuk, Isopren-Elastomer, Butadien-Elastomer, Styrol-Butadien-Elastomer, Acrylnitril-Butadien-Elastomer und/oder Mischungen von Acrylnitril-Butadien-Elastomer mit Polyvinylchlorid.

Gemäß dem erfindungsgemäßen Verfahren wird künstlich hergestelltes gasförmiges Ozon eingesetzt. Folglich handelt es sich hierbei nicht um natürliches, in der Atmosphäre vorkommendes Ozon. Günstigerweise wird das Ozon in einem Ozongenerator über eine elektrische Entladung aus Sauerstoff hergestellt. Das Ozon lässt man zumindest auf einen Teil der Elastomeroberfläche einwirken. Dieses bedeutet, dass nicht notwendigerweise die gesamte Oberfläche des Wischblatts mit dem Ozon in Berührung kommen muss. Die Elastomeroberfläche ist hierbei die Oberfläche des Wischblatts, dessen Material das zuvor erwähnte Elastomer umfasst. Hierbei wird also das Elastomer mit dem Ozon kontaktiert. Ohne auf eine Theorie festgelegt zu sein, wird angenommen, dass das Ozon mit den olefinischen Kohlenstoff-Kohlenstoff-Doppelbindungen reagiert und neue funktionelle Gruppen ausbildet.

Weiterhin ist vorgesehen, dass der Abschnitt des Wischblatts, auf dessen Oberfläche das Ozon einwirkt, während der Einwirkung höchstens bis zu der für die Ozoneinwirkung kritischen Dehnungsgrenze des Elastomers gedehnt wird. Die kritische Dehnungsgrenze eines Elastomers ist hierbei als die maximale Dehnung, angegeben in Prozent, zu verstehen, bei der für eine bestimmte Beanspruchungszeit bei einer bestimmten Ozonkonzentration, Temperatur und relative Luftfeuchtigkeit keine Risse auftreten.
Die kritische Dehnungsgrenze ist für jedes Wischblatt bei den jeweiligen Ozonierungsparameter zu bestimmen.

"Keine Risse" bedeutet hierbei insbesondere, dass bei optischer Begutachtung ohne weitere Hilfsmittel wie Mikroskope, etc. keine Risse erkennbar sind.

Die Dehnung kann auch weit unter der kritischen Dehnungsgrenze liegen, so dass im Ergebnis ein mechanisch nicht beanspruchtes Wischblatt behandelt wird. So kann beispielsweise die Dehnung in einem Bereich von ≥ 0% bis ≤ 50% der kritischen Dehnungsgrenze, von ≥ 10% bis ≤ 40% der kritischen Dehnungsgrenze oder von ≥ 20% bis ≥ 40% der kritischen Dehnungsgrenze liegen. Als Beispiel sei Naturkautschuk mit einer kritischen Dehnungsgrenze von 3% genannt. Bei einer Dehnung von 10% der kritischen Dehnungsgrenze wäre die Dehnung insgesamt 0,3%.

In absoluten Zahlen ausgedrückt kann beispielsweise die Dehnung insgesamt in einem Bereich von ≥ 0% bis ≤ 0,5% oder von ≥ 0,1% bis ≤ 0,4% liegen.

Bei solch geringen mechanischen Belastungen bildet sich auf der Elastomeroberfläche eine ozonierte Schicht, welche die Funktion einer Schutzschicht übernehmen kann und das weitere Eindringen von Ozon in den Elastomerkörper hemmt. Ohne auf eine Theorie festgelegt zu sein, wird angenommen, dass hierbei Spaltungen der Elastomerketten durch Ozonolyse nicht oder nur in unwesentlichem Maße vorkommen. Diese Schicht weist außerdem eine gute Verschleißbeständigkeit auf, reduziert die Reibung des Elastomers auf Glas und sorgt darüber hinaus aufgrund der neu eingeführten funktionellen Gruppen für eine gute Haftung von weiteren Beschichtungen. Insgesamt sind diese Eigenschaften alle vorteilhaft für die Funktion eines Wischgummis.

Der Schutz vor atmosphärischer ozonbedingter Alterung ist für den dünnen Kippsteg der Wischerleiste besonders wichtig, da durch die Bewegung des Scheibenwischers dieses Material ständig gedehnt wird. Hier wirkt sich der Schutz durch Ozonierung der Elastomeroberfläche besonders vorteilhaft aus. Hingegen ist vorteilhaft an der Ozonierung der Elastomeroberfläche im Bereich der Wischlippe, dass eine lokal aufgebrachte Gleitbeschichtung besser haftet. Selbst wenn die Gleitbeschichtung sich gelöst hat, weist die ozonierte Wischlippe noch eine geringere Reibung auf Glas auf als die unbehandelte.

Die Behandlung der Elastomeroberfläche mit Ozon kann in Ergänzung zu der üblichen Halogenierung oder aber vorteilhafterweise als Ersatz für die Halogenierung erfolgen.

In einer Ausführungsform des erfindungsgemäßen Verfahrens liegt die Konzentration des Ozons in der Gasphase in einem Bereich von ≥ 9 pphm bis ≤ 220 pphm. Hierbei ist die Angabe "pphm" als "parts per hundred million" zu verstehen und bezeichnet die Konzentration des Ozons in der Gasphase, welche sich über der zu behandelnden Elastomeroberfläche befindet. Die Konzentration kann auch in einem Bereich von ≥ 20 pphm bis ≥ 150 pphm oder von ≥ 50 pphm bis ≥ 100 pphm liegen. Vorteilhaft an den genannten Konzentrationsbereichen ist, dass sie von handelsüblichen Ozongeneratoren erreicht werden können und mit einer möglichst geringen Ozondosis gearbeitet werden kann.

In einer weiteren Ausführungsform des erfmdungsgemäßen Verfahrens wirkt das Ozon für eine Dauer von ≥ 1 Minute bis ≤ 60 Minuten auf die Elastomeroberfläche ein. Die Einwirkungszeit kann auch in einem Bereich von ≥ 2 Minuten bis ≤ 45 Minuten oder von ≥ 5 Minuten bis ≤ 30 Minuten liegen. Im erfindungsgemäßen Verfahren sind solche Taktzeiten möglich, wobei immer noch die eingangs beschriebenen Vorteile erreicht werden. Die Behandlung mit Ozon kann in einem diskontinuierlichen Verfahren erfolgen, wobei das Wischblatt in einen Ozonschrank eingebracht wird. Sie kann aber auch kontinuierlich erfolgen, wobei das strangförmige Elastomerprofil durch einen Ozonisierungstunnel mit einer bestimmten Verweilzeit transportiert wird.

In einer weiteren Ausführungsform des erfindungsgemäßen Verfahrens wird das Einwirken von Ozon bei einer relativen Luftfeuchtigkeit von ≥ 45% bis ≤ 65% durchgeführt. Die relative Luftfeuchtigkeit kann auch in einem Bereich von ≥ 50% bis ≤ 60% oder von ≥ 52% bis ≤ 58% liegen. Diese Werte können in einem Ozonschrank oder in einem Ozonisierungstunnel eingestellt werden. Es ist vorteilhaft, die relative Luftfeuchtigkeit zwischen diese Grenzen zu halten, um eine kontrollierte Ozonisierung zu erreichen. Eine höhere relative Luftfeuchtigkeit, insbesondere über 80%, führt zu hoheren Ozonierungs-Geschwindigkeiten, die im schlimmsten Fall zu unerwünschten Oberflächeneigenschaften führen können, wie Micro-Cracking der Oberfläche. Eine niedrigere relative Luftfeuchtigkeit (< 45%) führt zu unerwünscht niedrige Ozonierungs-Geschwindigkeiten.

In einer weiteren Ausführungsform des erfindungsgemäßen Verfahrens wird das Einwirken von Ozon bei einer Temperatur von ≥ 20 °C bis ≤ 40 °C durchgeführt. Die Temperatur kann auch in einem Bereich von ≥ 22 °C bis ≤ 38 °C oder von ≥ 25 °C bis ≤ 35 °C liegen. Es ist vorteilhaft, die Temperatur zwischen diese Grenzen zu halten, um eine kontrollierte Ozonisierung zu erreichen. Eine höhere Temperatur (> 40 °C) führt zu hoheren Ozonierungs-Geschwindigkeiten, die im schlimmsten Fall zu unerwünschten Oberflächeneigenschaften führen können, wie Micro-Cracking der Oberfläche. Eine niedrigere Temperatur (< 20 °C) ergibt unerwünscht niedrige Ozonierungs-Geschwindigkeiten.

In einer weiteren Ausführungsform des erfindungsgemäßen Verfahrens wird das Wischblatt vor der Einwirkung von Ozon für eine Zeit von ≥ 4 Stunden bis ≤ 24 Stunden bei der Temperatur und der relativen Luftfeuchtigkeit gelagert, bei der die Einwirkung von Ozon stattfinden wird. Hierbei wird das zu behandelnde Wischblatt oder strangförmige Elastomerprofil vor der Ozonierung vorkonditioniert. Die Zeit kann auch in einem Bereich von ≥ 5 Stunden bis ≤ 20 Stunden oder von ≥ 6 Stunden bis ≤ 8 Stunden liegen. Vorteilhaft an dieser Vorkonditionierung ist, dass das Wischblatt dann die Temperatur der Ozonisierung angenommen hat, falls das Wischblatt vorher bei einer anderen Temperatur gelagert war.

Gegenstand der vorliegenden Erfindung ist weiterhin ein Wischblatt für Scheibenwischer, umfassend eine modifizierte Oberfläche, wobei die modifizierte Oberfläche durch ein Verfahren gemäß der vorliegenden Erfindung erhalten wird. Hierbei handelt es sich also um ein Wischblatt, dessen Material ein Elastomer mit olefinischen Kohlenstoff-Kohlenstoff-Doppelbindungen umfasst und wobei zumindest ein Teil der Oberfläche des Elastomers mit Ozon behandelt wurde. Derjenige Abschnitt des Wischblatts, auf dessen Oberfläche das Ozon einwirkt, wird hierbei während der Einwirkung höchstens bis zu der für die Ozoneinwirkung kritischen Dehnungsgrenze des Elastomers gedehnt. Die Vorteile eines solchen Wischblatts wurden bereits oben beschrieben. Erfindungsgemäß mit eingeschlossen sind auch Wischblätter, deren Oberfläche durch ein Verfahren gemäß den beschriebenen Ausführungsformen des erfindungsgemäßen Verfahrens modifiziert wurde.

In einer Ausführungsform des erfmdungsgemäßen Wischblatts wurde die Elastomeroberfläche bis in eine Tiefe von ≥ 0,1 µm bis ≤ 20 µm durch das Ozon modifiziert. Diese Tiefe kann auch in einem Bereich von ≥ 0,5 µm bis ≤ 15 µm oder von ≥ 1 µm bis ≤ 10 µm liegen. Unter "Tiefe" ist hierbei die Tiefe senkrecht zur Oberfläche des Wischblatts zu verstehen. Man kann die Modifizierung des Elastomers in den angegebenen Tiefen mittels des erfindungsgemäßen Verfahrens erreichen. Vorteilhaft an solchen Modifizierungstiefen ist, dass die Oberfläche die gewünschten Eigenschaften hat, während die Masse des Elastomers weiterhin die ursprünglichen Eigenschaften beibehält.

In einer weiteren Ausführungsform des erfindungsgemäßen Wischblatts umfasst das Material des Wischblatts ein Elastomer ausgewählt aus der Gruppe umfassend Ethylen-Propylen-Dien-Elastomer, Chlor-Butadien-Elastomer, Naturkautschuk, Isopren-Elastomer, Butadien-Elastomer, Styrol-Butadien-Elastomer, Acrylnitril-Butadien-Elastomer und/oder Mischungen von Acrylnitril-Butadien-Elastomer mit Polyvinylchlorid. Die genannten Elastomere, welche auch unter ihren Abkürzungen EPDM, CR, NR, IR, SBR, NBR und NBR/PVC bekannt sind, tragen für die Reaktion mit Ozon geeignete Kohlenstoff-Kohlenstoff-Doppelbindungen. Ihre Reaktionsprodukte mit Ozon weisen die erfindungsgemäß günstigen Eigenschaften auf.

Gegenstand der vorliegenden Erfindung ist ebenfalls die Verwendung eines elastomeren strangförmigen Profils, welches eine modifizierte Oberfläche umfasst, als Wischblatt für Scheibenwischer, wobei die modifizierte Oberfläche erhalten wird, indem man künstlich hergestelltes gasförmiges Ozon zumindest auf einen Teil der Elastomeroberfläche einwirken lässt und wobei der Abschnitt des Profils, auf dessen Oberfläche das Ozon einwirkt, während der Einwirkung höchstens bis zu der für die Ozoneinwirkung kritischen Dehnungsgrenze des Elastomers gedehnt wird.

Erfindungsgemäß mit eingeschlossen ist hierbei die Verwendung eines elastomeren strangförmigen Profils, welches eine modifizierte Oberfläche umfasst, als Wischblatt für Scheibenwischer, wobei die Modifizierung der Elastomeroberfläche in entsprechender Anwendung der beschriebenen Ausführungsformen des erfindungsgemäßen Verfahrens oder gemäß der vorstehend beschriebenen Dehnungsgrenzen vorgenommen wurde.

## Patentansprüche

1. Verfahren zur Modifizierung der Oberfläche eines Wischblatts für Scheibenwischer, wobei das Material des Wischblatts ein Elastomer mit olefinischen Kohlenstoff-Kohlenstoff-Doppelbindungen umfasst, **dadurch gekennzeichnet, dass** man künstlich hergestelltes gasförmiges Ozon zumindest auf einen Teil der Elastomeroberfläche einwirken lässt und wobei der Abschnitt des Wischblatts, auf dessen Oberfläche das Ozon einwirkt, während der Einwirkung höchstens bis zu der für die Ozoneinwirkung kritischen Dehnungsgrenze des Elastomers gedehnt wird.

2. Verfahren gemäß Anspruch 1, wobei die Konzentration des Ozons in der Gasphase in einem Bereich von ≥ 9 pphm bis ≤ 220 pphm liegt.

3. Verfahren gemäß Anspruch 2 oder 3, wobei das Ozon für eine Dauer von ≥ 1 Minute bis ≤ 60 Minuten auf die Elastomeroberfläche einwirkt.

4. Verfahren gemäß einem der Ansprüche 1 bis 3, wobei das Einwirken von Ozon bei einer relativen Luftfeuchtigkeit von ≥ 45% bis ≤ 65% durchgeführt wird.

5. Verfahren gemäß einem der Ansprüche 1 bis 4, wobei das Einwirken von Ozon bei einer Temperatur von ≥ 20 °C bis ≤ 40 °C durchgeführt wird.

6. Verfahren gemäß einem der Ansprüche 1 bis 7, wobei das Wischblatt vor der Einwirkung von Ozon für eine Zeit von ≥ 4 Stunden bis ≤ 24 Stunden bei der Temperatur und der relativen Luftfeuchtigkeit gelagert wird, bei der die Einwirkung von Ozon stattfinden wird.

7. Wischblatt für Scheibenwischer, umfassend eine modifizierte Oberfläche, **dadurch gekennzeichnet, dass** die modifizierte Oberfläche durch ein Verfahren gemäß einem der Ansprüche 1 bis 6 erhalten wird.

8. Wischblatt gemäß Anspruch 7, wobei die Elastomeroberfläche bis in eine Tiefe von ≥ 0,1 µm bis ≤ 20 µm durch das Ozon modifiziert wurde.

9. Wischblatt gemäß Anspruch 7 oder 8, wobei das Material des Wischblatts ein Elastomer umfasst, welches ausgewählt ist aus der Gruppe umfassend Ethylen-Propylen-Dien-Elastomer, Chlor-Butadien-Elastomer, Naturkautschuk, Isopren-Elastomer, Butadien-Elastomer, Styrol-Butadien-Elastomer, Acrylnitril-Butadien-Elastomer und/oder Mischungen von Acrylnitril-Butadien-Elastomer mit Polyvinylchlorid.

10. Verwendung eines elastomeren strangförmigen Profils, welches eine modifizierte Oberfläche umfasst, als Wischblatt für Scheibenwischer, **dadurch gekennzeichnet, dass** die modifizierte Oberfläche erhalten wird, indem man künstlich hergestelltes gasförmiges Ozon zumindest auf einen Teil der Elastomeroberfläche einwirken lässt und wobei der Abschnitt des Profils, auf dessen Oberfläche das Ozon einwirkt, während der Einwirkung höchstens bis zu der für die Ozoneinwirkung kritischen Dehnungsgrenze des Elastomers gedehnt wird.

## Claims

1. Process for modifying the surface of a wiper blade for windscreen wipers, where the material of the wiper blade comprises an elastomer having olefinic carbon-carbon double bonds, **characterized in that** synthetically produced gaseous ozone is permitted to act at least on a portion of the elastomer surface, and where, during the action, the section of the wiper blade on the surface of which the ozone acts is at most elongated as far as the critical ozone-action tensile strain limit of the elastomer.

2. Process according to Claim 1, where the concentration of the ozone in the gas phase is in the range from ≥ 9 pphm to ≤ 220 pphm.

3. Process according to Claim 2 or 3, where the ozone acts for a period of from ≥ 1 minute to ≤ 60 minutes on the elastomer surface.

4. Process according to any of Claims 1 to 3, where the action of ozone takes place at a relative humidity of from ≥ 45% to ≤ 65%.

5. Process according to any of Claims 1 to 4, where the action of ozone takes place at a temperature of from ≥ 20°C to ≤ 40°C.

6. Process according to any of Claims 1 to 5, where, prior to the action of ozone, the wiper blade is stored for a period of from ≥ 4 hours to ≤ 24 hours at the temperature and relative humidity at which the action of ozone will take place.

7. Wiper blade for windscreen wipers, comprising a modified surface, **characterized in that** the modified surface is obtained via a process according to any of Claims 1 to 6.

8. Wiper blade according to Claim 7, where the elastomer surface has been modified by the ozone as far as a depth of from ≥ 0.1 µm to ≤ 20 µm.

9. Wiper blade according to Claim 7 or 8, where the material of the wiper blade comprises an elastomer selected from the group consisting of ethylenepropylene-diene elastomer, chlorobutadiene elastomer, natural rubber, isoprene elastomer, butadiene elastomer, styrene-butadiene elastomer, acrylonitrile-butadiene elastomer and/or mixtures of acrylonitrile-butadiene elastomer with polyvinyl chloride.

10. Use of an elastomeric linear profile which comprises a modified surface as wiper blade for windscreen wipers, **characterized in that** the modified surface is obtained by permitting synthetically produced gaseous ozone to act at least on a portion of the elastomer surface, and where, during the action, the section of the wiper blade on the surface of which the ozone acts is at most elongated as far as the critical ozone-action tensile strain limit of the elastomer.

## Revendications

1. Procédé de modification de la surface du balai d'un essuie-glace, le matériau du balai comportant un élastomère présentant des doubles liaisons oléfiniques carbone-carbone,
**caractérisé en ce que**
on laisse agir au moins sur une partie de la surface de l'élastomère de l'ozone gazeux produit artificiellement et pendant cette action, la partie du balai sur la surface de laquelle l'ozone agit étant étirée au plus jusqu'à la limite d'allongement critique pour l'action de l'ozone.

2. Procédé selon la revendication 1, dans lequel la concentration en ozone dans la phase gazeuse est située dans la plage de ≥ 9 pphm à ≤ 220 pphm.

3. Procédé selon les revendications 2 ou 3, dans lequel l'ozone agit sur la surface de l'élastomère pendant une durée de ≥ 1 minute à ≤ 60 minutes.

4. Procédé selon l'une des revendications 1 à 3, dans lequel l'action de l'ozone est réalisée à une teneur relative en humidité de l'air de ≥ 45 % à ≤ 65 %.

5. Procédé selon l'une des revendications 1 à 4, dans lequel l'action de l'ozone est réalisée à une température de ≥ 20°C à ≤ 40°C.

6. Procédé selon l'une des revendications 1 à 5, dans lequel avant l'action de l'ozone, le balai est entreposé en une durée de ≥ 4 heures à ≤ 24 heures à la température et à l'humidité relative de l'air auxquelles l'action de l'ozone aura lieu.

7. Balai pour essuie-glace comportant une surface modifiée, **caractérisé en ce que** la surface modifiée est obtenue à l'aide d'un procédé selon l'une des revendications 1 à 6.

8. Balai selon la revendication 7, dans lequel la surface de l'élastomère a été modifiée par l'ozone jusqu'à une profondeur de ≥ 0,1 µm à ≤ 20 µm.

9. Balai selon les revendications 7 ou 8, dans lequel le matériau du balai comporte un élastomère sélectionné dans l'ensemble comprenant les élastomères d'éthylène-propylène-diène, les élastomères de chlore-butadiène, le caoutchouc naturel, les élastomères d'isoprène, les élastomères de butadiène, les élastomères de styrène et butadiène, les élastomères d'acrylonitrile et de butadiène et/ou des mélanges d'élastomères d'acrylonitrile et de butadiène avec du poly(chlorure de vinyle).

10. Utilisation d'un profilé d'élastomère en forme de barreau qui comporte une surface modifiée comme balai pour essuie-glace, **caractérisée en ce que** la surface modifiée est obtenue en faisant agir au moins sur une partie de la surface de l'élastomère de l'ozone gazeux produit artificiellement et pendant cette action, en étirant au plus jusqu'à la limite d'allongement critique pour l'action de l'ozone la partie du balai sur la surface de laquelle l'ozone agit.
